Europäisches Patentamt

European Patent Office

Office européen des brevets

(11) Veröffentlichungsnummer: **0 476 430 A1**

# EUROPÄISCHE PATENTANMELDUNG

(21) Anmeldenummer: **91114915.1**

(22) Anmeldetag: **04.09.91**

(51) Int. Cl.5: **C09D 7/00**, C08J 11/06

(30) Priorität: **08.09.90 DE 4028577**

(43) Veröffentlichungstag der Anmeldung:
**25.03.92 Patentblatt 92/13**

(84) Benannte Vertragsstaaten:
**AT BE CH DE DK ES FR GB GR IT LI LU NL SE**

(71) Anmelder: **Herberts Gesellschaft mit beschränkter Haftung**
**Christbusch 25**
**W-5600 Wuppertal 2(DE)**

(72) Erfinder: **Schubert, Bernd, Dr.**
**Lindenstrasse 8**
**W-5090 Leverkusen 3(DE)**
Erfinder: **Ferner, Uwe, Dr.**
**Am Scherensteich 7 a**
**W-5209 St. Augustin 1(DE)**
Erfinder: **Bauerett, Georg**
**Pappelweg 6**
**W-5044 Kerpen 8(DE)**

(74) Vertreter: **Türk, Gille, Hrabal**
**Brucknerstrasse 20**
**W-4000 Düsseldorf 13(DE)**

(54) **Verfahren und Vorrichtung zur Entsorgung der Oversprays strahlenhärtbarer Lacke in Nassspritzkabinen.**

(57) 2.1. Oversprays wurden durch Verfahrensflüssigkeiten aus Naßspritzkabinen abgeführt und durch Verbrennung entsorgt. Es soll eine vollständige Entsorgung unter Erzielung verwertbarer Materialien bereitgestellt werden.

2.2. Dies erfolgt durch ein Verfahren und eine Vorrichtung zur Entsorgung der Oversprays strahlenhärtbarer Lacke aus Naßspritzkabinen, deren Auffangwände mit einer Emulsion eines strahlenhärtbaren Lacks mit einem Überschuß an Emulgator bespült werden, worauf eine Redoxpolymerisation mit anschließender Filtration der erhaltenen Pulver erfolgt.

2.3. Verwertung der Oversprays strahlenhärtbarer Lacke.

Die Erfindung betrifft das Gebiet der Entsorgung von beim Spritzlackieren mit strahlenhärtbaren Lacken in einer Naßspritzkabine erhaltenen Oversprays durch Auffangen an mit Verfahrensflüssigkeit bespülten Auffangwänden, Ableiten des erhaltenen Verfahrensflüssigkeit-Overspray-Gemischsaus der Naßspritzkabine und Entfernen des Overspray-Anteils aus dem Verfahrensflüssigkeit-Overspray-Gemisch. Das Verfahren kann insbesondere mit lösemittelfreien oder lösemittelhaltigen strahlenhärtbaren Lacken sowie wäßriger Emulsion von strahlenhärtbaren Lacken durchgeführt werden. Es ist zur halbkontinuierlichen oder ansatzweisen Arbeitsweise geeignet.

Beim Spritzlackieren trifft ein Teil des feinversprühten Lacks nicht auf dem zu lackierenden Objekt auf. Dieser Anteil wird als Overspray bezeichnet. Der Overspray muß entsorgt werden, da er Umweltprobleme durch zusätzlich anfallenden Abfall mit sich bringt. Zur Entsorgung wird im allgemeinen in sogenannten Naßspritzkabinen gearbeitet. Diese Kabinen enthalten eine oder mehrere Flächen, beispielsweise Wände, die mit Wasser als sogenannte Verfahrensflüssigkeit bespült werden und als "Auffangwände" bezeichnet werden. Der Overspray wird durch die die Auffangwände berieselnde Verfahrensflüssigkeit aus der Naßspritzkabine abgeleitet, so daß einerseits keine Ablagerungen an den Kabinenwandungen entstehen und andererseits ein rasches Abführen der Sprühnebel ermöglicht wird.

Aus der aus der Naßspritzkabine austretenden Verfahrensflüssigkeit mußte bisher der Overspray-Anteil in aufwendiger Weise entfernt werden. Dies erfolgte unter großem Energieaufwand und apparativem Aufwand durch Verbrennen der organischen Anteile der Verfahrensflüssigkeit. Es ergaben sich Probleme durch die entstehenden Verbrennungabgasse; auch war eine Verwertung des organischen Anteils der Verfahrensflüssigkeit nicht möglich Aufgabe der Erfindung ist die Bereitstellung eines Verfahrens und einer Vorrichtung zur problemlosen Entsorgung der Oversprays strahlenhärtbarer Lacke aus Naßspritzkabinen, die eine einfache, rasche und völlige Entfernung des Overspray-Anteils aus dem Verfahrensflüssigkeit-Overspray-Gemisch von Naßspritzkabinen ermöglichen, wobei Verbrennungsvorgänge vermieden werden und die Möglichkeit einer Verwertung der organischen Anteile der Verfahrensflüssigkeit besteht.

Es hat sich gezeigt, daß diese Aufgabe gelöst werden kann durch ein Verfahren zur Entsorgung des beim Spritzlackieren mit strahlenhärtbaren Lacken in einer Naßspritzkabine erhaltenen Oversprays durch Auffangen an mit Verfahrensflüssigkeit gespülten Auffangwänden und Entfernen des Oversprayanteils aus dem Verfahrensflüssigkeit-Overspray-Gemisch, das dadurch gekennzeichnet ist, daß man als Verfahrensflüssigkeit eine Emulsion eines strahlenhärtbaren Lacks in Wasser mit einem Überschuß an Emulgator verwendet und den Overspray-Anteil aus dem Verfahrensflüssigkeit-Overspray-Gemisch durch Redoxpolymerisation und anschließende Filtration der erhaltenen pulverförmigen Produkte entfernt.

Beim erfindungsgemäßen Verfahren werden die Auffangwände der Naßspritzkabine nicht mit Wasser, sondern mit einer Lackemulsion als Verfahrensflüssigkeit berieselt. Die Lackemulsion enthält mindestens etwa 2 Gew.% strahlenhärtbaren Lack (berechnet als Festkörper der strahlenhärtbaren Lackanteile). Die Obergrenze ist nicht kritisch. Sie kann beispielsweise in der Größenordnung bis zu 50 Gew.% liegen, z.B. bei bis zu 45 Gew.%. Bevorzugt enthält die Emulsion 3 bis 5 Gew.% an strahlenhärtbarem Lack, jeweils bezogen auf das Gewicht des strahlenhärtbaren Lackanteils und das Gesamtgewicht der Verfahrensflüssigkeit (Emulsion).

Zur Herstellung der Emulsion werden ein oder mehrere Emulgatoren verwendet. Diese Emulgatoren werden im Überschuß zu der zur Emulgierung des strahlenhärtbaren Lackes benötigten Menge zugesetzt. Die überschüssige Menge beträgt beispielsweise 0,1 bis 5 Gew.%, bevorzugt 0,1 bis 2 Gew.%, besonders bevorzugt 0,2 bis 0,7 Gew.%, beispielsweise 0,5 Gew.%, bezogen auf das Gewicht des Emulgators und das Gesamtgewicht der Verfahrensflüssigkeit.

Die überschüssigen Emulgator enthaltende, als Verfahrensflüssigkeit in der Naßspritzkabine verwendete, Emulsion nimmt den beim Spritzlackieren entstehenden Overspray auf. Vorteilhaft im Vergleich mit der üblichen Verwendung von Wasser als Verfahrensflüssigkeit ist die Bildung einer Emulsion der Overspray-Tröpfchen in der erfindungsgemäß eingesetzten Verfahrensflüssigkeit. Bei Verwendung von Wasser als Verfahrensflüssigkeit erfolgt keine derartige Emulgierung; es bilden sich flächige, zum Teil aufschwimmende Abscheidungsprodukte. Erfindungsgemäß wird dies vermieden; es erfolgt die Bildung einer Emulsion. Die Einemulgierung kann beim Umlaufprozeß der Verfahrensflüssigkeit, die in die Naßspritzkabine zurückgeführt werden kann, unterstützt werden, beispielsweise durch das Pumpen im Umlaufkreislauf. Zur verbesserten Einemulgierung können herkömmliche Pumpen durch hochtourige Pumpen, wie Kreiselpumpen, ersetzt werden. Es können jedoch auch übliche Dispergier- oder Emulgieraggregate, wie beispielsweise Kolloidmühlen, eingesetzt werden.

Das erfindungsgemäße Verfahren ist für die Entsorgung von Oversprays strahlenhärtbarer Lacke geeignet. Bei derartigen Lackmaterialien handelt es sich im allgemeinen um Systeme auf der Basis ungesättigter radikalisch polymerisierbarer Verbindungen, die entweder lösemittelfrei oder lösemittelhaltig sind. Derartige ungesättigte radikalisch polymerisierbare Verbindungen sind beispielsweise (meth)acrylisch und/oder vinylisch ungesättigte Monomere, Oligomere, Polymere, Copolymere und/oder Kombinationen davon. Sie können einfach oder mehrfach ungesättigt sein sowie auch andere funktionelle Gruppen enthalten. Beispiele für ungesättigte Monomeren sind Butyl(meth)acrylat, Dipropylenglykoldi(meth)acrylat, Trimethylolpropantri(meth)acrylat. Beispiele für Oligomere bzw. Prepolymere sind (meth)acrylfunktionelle (Meth)acrylcopolymere, Epoxidharz(meth)acrylate, z.B. Umsetzungsprodukte aus 2 Mol (Meth)acrylsäure und handelsüblichen Epoxidharzen, wie z.B. Epicote 828, Polyester-(meth)acrylate, Polyether(meth)acrylate, Urethan-(meth)acrylate, Amin(meth)acrylate, ungesättigte Polyester, ungesättigte Polyurethane, Silicon-(meth)acrylate und Kombinationen davon.

Derartige Materialien können häufig ohne Lösemittel eingesetzt werden, wenn die radikalisch polymerisierbaren Materialien ausreichend dünnflüssig sind, oder wenn beispielsweise ein dünnflüssiges Monomeres oder Polymeres als "Reaktivverdünner" dient, um höherviskose Oligomere oder Polymere auf Spritzapplikations-Viskosität einzustellen.

Erfindungsgemäß werden Oversprays, die beispielsweise auf derartigen lösemittelfreien, lösemittelhaltigen oder wasserhaltigen Lacken basieren, entsorgt. Die Verfahrensflüssigkeiten, die in Form von Emulsionen vorliegen, enthalten bevorzugt die gleichen strahlenhärtbaren Lacke wie die aufzufangenden Oversprays, es ist jedoch auch möglich, andere strahlenhärtbare Lacke einzusetzen.

Zur Herstellung der Verfahrensflüssigkeiten können übliche dem Fachmann geläufige Emulgatoren, wie ionische oder nichtionische Tenside verwendet werden, die als Handelsprodukt erhältlich sind. Beispielsweise können solche des "Catalogue of Products, Speciality Chemicals " der Firma ICI verwendet werden. Spezielle Beispiele sind Polyoxyethylen- und/oder Polyoxypropylen-Sorbitanlinolsäurederivate und Alkylphenolalkoxylate, wie Alkylphenolethoxylate.

Die in der Naßspritzkabine mit Overspray angereicherte Verfahrensflüssigkeit kann entweder direkt der Redoxpolymerisation zugeführt werden oder kann erneut im Kreislauf in die Naßspritzkabine zurückgeführt werden, wobei auch, wie vorstehend erwähnt, eine Emulgierstufe mittels eines Dispergier- oder Emulgieraggregates, eingeschaltet werden kann.

Zur Redoxpolymerisation kann die erhaltene Emulsion einer dem Fachmann geläufigen Polymerisation in Gegenwart von durch Redoxsysteme erzeugten Radikalen unterzogen werden. Zur Redoxpolymerisation werden vorwiegend Peroxide in Gegenwart von Reduktionsmitteln eingesetzt.

Ein derartiges Verfahren ist beispielsweise in der älteren deutschen Patentanmeldung P 39 09 790.0 der gleichen Anmelderin beschrieben. Dort werden als Peroxide beispielsweise Wasserstoffperoxid (beispielsweise als 30%ige Lösung, die jedoch vor dem Einsatz verdünnt werden kann), Peroxodisulfate, wie Alkali- oder Ammoniumperoxodisulfate, Persulfate, beispielsweise Alkali- oder Ammoniumpersulfate, Perborate, wie Alkaliperborate, Alkali- oder andere Metallperoxide und organische Peroxide, die beispielsweise als Radikalinitiatoren in der Kunststoffindustrie üblich sind, eingesetzt. Beispiele für Peroxide sind Di-t-butylperoxid, Dibenzoylperoxid, Peroxocarbonsäuren, wie Peroxoessigsäure, Peroxodicarbonate, wie Di-sec-butylperoxodicarbonat, Peroxydiester, wie 2-Ethylhexansäure-tert-butyl-perester, Hydroperoxide, wie Cumolperoxid und Ketonperoxide, wie Methylethyl-keton-peroxid. Die Peroxide und Peroxoverbindungen werden insbesondere in in Wasser gelöster oder dispergierter bzw. emulgierter Form dem Reaktionssystem zugesetzt.

Aus dem Peroxid werden durch Zusatz von Reduktionsmitteln Radikale gebildet, die als Initiatoren der radikalischen Polymerisation wirken. Geeignete Reduktionsmittel sind beispielsweise reduzierende wasserlösliche Metallsalze in ihren niedrigen Wertigkeitsstufen, wie Eisen-II- oder Cobalt-II- oder Kupfer-I-Salze, z.B. Eisen-II-Chlorid (z.B. als Tetrahydrat); reduzierende Stickstoffverbindungen, wie Hydroxylamin, Hydrazin und deren Derivate, z.B. Natriumhydrazomethandisulfonat, aber auch Amine, wie beispielsweise M,N-Diethylanilin, N,N-Dimethylanilin, N-Phenyldiethanolamin oder Trihexylamin; Schwefel enthaltende Verbindungen wie beispielsweise Schwefeldioxid, Sulfite, Hydrogensulfite, Disulfite, Dithionite, Thiosulfate, Sulfoxylate, Formamidinsulfinsäure, Schwefelwasserstoff, Mercaptane, Thiophenole und deren Salze; Phosphite, wie Natriumhypophosphit; und organische reduzierende Verbindungen, wie z.B. solche mit der in Diol-Gruppierung, beispielsweise Ascorbinsäure, Dihydroxymaleinsäure; und organische Sulfinsäuren.

Erfindungsgemäß reicht es aus, die zur Einleitung der Redoxpolymerisation benötigten Peroxide und Reduktionsmittel in relativ geringen Mengen einzusetzen. Es genügen beispielsweise katalytische Mengen, wobei jedoch auch größere Mengen eingesetzt werden können. Es genügen beispielsweise 0,01 Gew.% Peroxid (berechnet als reines Peroxid), bezogen auf den aus dem wäßrigen System zu beseitigenden nicht-wäßrigen Lackanteil, der neben den ungesättigten, radikalisch polymerisierbaren Verbindungen auch weitere nicht-wäßrige, nicht-reaktive Anteile enthalten kann.

Die Peroxidmenge kann beispielsweise bis zu 50 Gew.%, bezogen auf den gesamten nicht-wäßrigen Anteil, betragen. In der Praxis liegt die Obergrenze bevorzugt bei bis zu etwa 10 Gew.%. Besonders bevorzugt werden 0,3 bis 5 Gew.% Peroxid eingesetzt.

Die Reduktionsmittelmenge kann entsprechend der Peroxidmenge gering gehalten werden. Sie hängt im Prinzip von der Menge des eingesetzten Peroxids, der Art des Peroxids und der Art des Reduktionsmittels ab. Es können beispielsweise geringe Mengen von 0,001 Gew.%, bezogen auf den zu beseitigenden nicht-wäßrigen Anteil, eingesetzt werden. Die Obergrenze kann bei bis zu beispielsweise 50 Gew.% liegen. In der Praxis liegt die untere Grenze bevorzugt bei 0,01, besonders bevorzugt bei 0,05 Gew.% Reduktionsmittel, die obere Grenze bevorzugt bei 10, besonders bevorzugt bei 5 Gew.% Reduktionsmittel.

Das Reduktionsmittel kann dem zu entsorgenden System im Prinzip zu jedem beliebigen Zeitpunkt zugesetzt werden. Bevorzugt wird es vorgelegt, bevor das Peroxid zugegeben wird, da so ein besonders feines pulverförmiges klebefreies Polymeres entsteht. In der Praxis wird das Reduktionsmittel somit entweder der Emulsion von vornherein zugesetzt und mit der Verfahrensflüssigkeit durch die Naßspritzkabine geführt, oder aber wird es auch erst unmittelbar vor der Redoxpolymerisation zugesetzt.

Die Peroxide bzw. Peroxoverbindungen werden bevorzugt nach dem Zusatz der Reduktionsmittel zu der zu entsorgenden Verfahrensflüssigkeit gefügt. Im Prinzip können sie zu der im Umlauf befindlichen Verfahrensflüssigkeit zu jedem Zeitpunkt zugesetzt werden. Bevorzugt werden sie jedoch der Verfahrensflüssigkeit zugesetzt, die nicht mehr in den Umlauf in die Naßspritzkabine zurückgeführt wird. Der Zusatz der Peroxide bzw.Peroxoverbindungen erfolgt somit bevorzugt außerhalb des Kreislaufs in hierfür geeigneten Behältern, wie Tanks, Kesseln oder Fässern.

Erfindungsgemäß kann die Redoxpolymerisation bei verschiedenen Temperaturen, beispielsweise im Bereich von 0 bis 80°C und bevorzugt bei Raumtemperatur durchgeführt werden.

Die Polymerisation ist wirksam an Verfahrensflüssigkeiten, die bis zu etwa 50 Gew.% nicht-wäßrige Anteile enthalten können. Diese nicht-wäßrigen Anteile können durch die strahlenhärtbaren Lackanteile sowie auch weitere Anteile, wie nicht-reaktive Polymere, Pigmente, Photoinitiatoren usw. bedingt sein. Es hat sich gezeigt, daß auch nichtpolymerisierbare Anteile erfindungsgemäß entsorgt werden können, da diese in die Polymerteilchen eingebaut bzw. von diesen absorbiert werden können. Die untere Grenze der nicht-wäßrigen Anteile der zu entsorgenden Verfahrensflüssigkeiten kann sehr tief, bei beispielsweise geringfügig über 2 Gew.%, z.B. bei 3 Gew.%, liegen. Bevorzugt liegt der Anteil an nicht-wäßrigen Materialien bei 3 bis 30 Gew.%, besonders bevorzugt bei 10 bis 20 Gew.%, berechnet als strahlenhärtbarer Lackanteil.

Es ist vorteilhaft, daß sich bei der vorliegenden Erfindung durch die Redoxpolymerisation hochmolekulare Produkte bilden, die in kleinteiliger Form, beispielsweise als Pulver vorliegen. Derartige Pulver können sehr leicht entsorgt werden. Dies erfolgt erfindungsgemäß durch Filtration.

Geeignet sind verschiedene Filtermaterialien, wie beispielsweise Beutelfilter, aber auch Filter unter Zuhilfenahme von anorganischen oder organischen Filterhilfen.

Die Filtration wird in Abhängigkeit vom Zeitpunkt und der Art der Redoxpolymerisation durchgeführt.

Die angefallenen Pulver weisen den Vorteil auf, daß sie feinteilig und nicht klebrig sind. Sie können daher einer weiteren Verwertung zugeführt werden. Beispielsweise können sie als Zusätze bzw. Füllstoffe für verschiedenste Materialien dienen. Sie können, falls gewünscht, auf übliche Art mit sauberem Wasser nachgewaschen werden, um gegebenenfalls lösliche Rückstände der Reduktions- bzw. Redoxkomponente herauszuwaschen. Nach abschließender Filtration können die Pulver auf übliche Art getrocknet werden. Falls gewünscht, können sie anschließend auf die gewünschte Korngrößenverteilung für eine eventuelle spätere Verwendung gemahlen werden oder können sie im Naßzustand auf die gewünschte Korngröße gemahlen und anschließend getrocknet werden.

Das erfindungsgemäße Verfahren kann entweder halbkontinuierlich oder diskontinuierlich durchgeführt werden. Bei der halbkontinuierlichen Verfahrensweise wird die Verfahrensflüssigkeit mehrfach im Kreislauf in die Naßspritzkabine zurückgeführt. Die Redoxpolymerisation kann zu jedem gewünschten Zeitpunkt, beispielsweise nach Ausbildung einer stabilen homogenen Emulsion, durchgeführt werden. Wie vorstehend erwähnt, kann das Reduktionsmittel vor, während oder nach dem Umlauf zu der Verfahrensflüssigkeit gefügt werden.

In den Kreislauf der Verfahrensflüssigkeit können gegebenenfalls auswechselbare, zuschaltbare Filter eingeschaltet werden, um teilchenförmige Verunreinigungen aus der Verfahrensflüssigkeit zu entfernen.

Nach Erreichen des gewünschten Overspray-Gehalts der Verfahrensflüssigkeit oder nach Beendigung des Spritzverfahrens kann bei der halbkontinuierlichen Verfahrensweise die erhaltene Verfahrensflüssigkeit in einen in den Kreislauf zuschaltbaren Vorratsbehälter eingepumpt werden. Dieser Vorratsbehälter kann beispielsweise mit einem Rührer versehen sein. Zur weiteren Emulgierung kann der Vorratsbehälter mit einer Emulgiervorrichtung, wie einem Dispergier- oder Emulgieraggregat, wie einer Kolloidmühle oder einer hochtourigen Pumpe, z.B. einer Kreiselpumpe, in Verbindung stehen, so daß die Verfahrensflüssigkeit aus dem Vorratsbehälter durch die Emulgiereinrichtung wieder im Kreislauf zum Vorratsbehälter zurückgeführt werden kann.

Die Redoxpolymerisation kann dann durch Zusatz des Reduktionsmittels (falls dieses in der Verfahrensflüssigkeit noch nicht enthalten war) und der Peroxid- bzw. Peroxoverbindung in dem Vorratsbehälter bzw. im Kreislauf Vorratsbehälter-Emulgiervorrichtung erfolgen. Anschließend kann in den Kreislauf eine Filtereinrichtung eingeschalten werden, die die Abfiltration des erhaltenen Polymerpulvers aus der Verfahrensflüssigkeit, gegebenenfalls im Kreislauf mit Vorratsbehälter und gegebenenfalls zuschaltbarer Emulgiervorrichtung, ermöglicht.

Das erfindungsgemäße Verfahren kann nicht nur in der vorstehend beschriebenen halbkontinuierlichen Verfahrensweise, sondern auch diskontinuierlich durchgeführt werden. Für eine derartige diskontinuierliche, ansatzweise Verfahrensweise ist es beispielsweise möglich, die Verfahrensflüssigkeit (Emulsion) so lange im Kreislauf durch die Naßspritzkabine und die sich gegebenenfalls anschließende Emulgiervorrichtung zu führen, bis eine stabile homogene Emulsion entstanden ist. Diese kann aus dem Kreislaufsystem entfernt werden und in getrennten Behältern der Redoxpolymerisation mit anschließender Filtration unterworfen werden.

Gemäß einer bevorzugten Ausführungsform der Erfindung wird die aus der Naßspritzkabine austretende emulgatorhaltige Verfahrensflüssigkeit in einen Vorratsbehälter eingeführt, in dem sie einem Rührvorgang unterworfen werden kann. Aus dem Vorratsbehälter wird die emulgatorhaltige Verfahrensflüssigkeit der Emulgiervorrichtung zugeführt. Die aus der Emulgiervorrichtung austretende Emulsion wird über eine Pumpe und gegebenenfalls zuschaltbare Filter in die Naßspritzkabine zurückgeführt und tritt aus dieser wieder in den Vorratsbehälter ein.

Zum gewünschten Zeitpunkt können Reduktionsmittel und gegebenenfalls zu einem nachfolgenden Zeitpunkt Peroxid zugesetzt werden. Das Reduktionsmittel kann der Emulsion an jeder beliebigen Stelle des Kreislaufs zugesetzt werden, beispielsweise im Vorratsbehälter, in der Dispergiervorrichtung, vor oder nach der Naßzelle.

Bei der ansatzweisen Durchführung des Verfahrens wird die Emulsion nach der Emulgiervorrichtung aus dem Kreislaufsystem entfernt. Dabei kann die Emulsion bereits mit dem Reduktionsmittel versetzt worden sein. Der Zusatz des Oxidationsmittels erfolgt dann in getrennten Behältern, beispielsweise Tanks, Kesseln oder Fässern, worauf das erhaltene hochmolekulare Produkt einer Filtration unterworfen wird.

Beim erfindungsgemäßen Verfahren kann ein Teil der als Verfahrensflüssigkeit aus der Naßspritzkabine erhaltenen mit strahlenhärtbarem Lack angereicherten Emulsion vor der Redoxpolymerisation abgezweigt werden. Dieser Anteil kann mit Wasser und weiterem Emulgatorzusatz zu einer neuen Verfahrensflüssigkeit aufbereitet werden. Es ist daher beim erfindungsgemäßen Verfahren nicht notwendig, frische strahlenhärtbare Lackmaterialien zur Herstellung der als Verfahrensflüssigkeit zu verwendenden Emulsion zu verwenden. Vielmehr können die beim Entsorgen erhaltenen aufkonzentrierten Verfahrensflüssigkeiten als Konzentrate zur Herstellung der neu einzusetzenden Verfahrensflüssigkeiten verwendet werden. Die Abzweigung der Verfahrensflüssigkeit kann sowohl bei dem vorstehend beschriebenen halbkontinuierlich oder diskontinuierlich durchgeführten Verfahren erfolgen.

Die erfindungsgemäße Verfahrensweise hat den Vorteil, daß leicht zu entsorgende abfiltrierbare pulverförmige Polymerisate anfallen. Eine Entsorgung durch Verbrennung ist somit nicht mehr erforderlich. Darüberhinaus können die als nichtklebrige Pulver anfallenden Polymerisate verschiedenen Einsatzzwecken zugeführt werden, wie beispielsweise als Zusätze zu härtbaren Polymermassen bzw. Kunststoffmassen, wie beispielsweise Gießmassen oder Überzugsmittel, wie Anstrichmittel.

Die Erfindung betrifft auch eine Vorrichtung, die aus einer Naßspritzkabine, einer nachschaltbaren Emulgiervorrichtung, beispielsweise einem Dispersions- oder Emulgieraggregat, wie eine hochtourige Kreiselpumpe oder einer Kolloidmühle, besteht. Zwischen die Naßspritzkabine und die Dispergiereinrichtung kann ein Vorratsbehälter gesetzt sein. Dieser Vorratsbehälter kann mit einer Rühreinrichtung, wie beispielsweise einem Turborührer, versehen sein. Von dem Vorratsbehälter und der zuschaltbaren Emulgiervorrichtung führen Leitungen über eine zuschaltbare Pumpe, beispielsweise eine Membranpumpe, zurück zur Naßspritzkabine oder zum Vorratsbehälter. Zuschaltbar in die Leitung zwischen Pumpe und Naßspritzzelle bzw. Vorratsbehälter sind eine oder mehrere Filtereinrichtungen. Als Filter sind beispielsweise Beutelfilter geeignet. Die von der Pumpe oder den Filtern wegführenden Leitungen sind mit einem Auslauf versehen. Dieser Auslauf dient dazu, entsorgte Verfahrenswässer abzuleiten, die homogenen stabilen Emulsionen zur ansatzweisen Redoxpolymerisation aus dem Kreislaufsystem abzuführen oder Anteile der mit Overspray angereicherten Verfahrenswässer (Konzentrate) vor der Redoxpolymerisation abzuführen, um daraus neu einzusetzende Verfahrenslösungen zu bereiten.

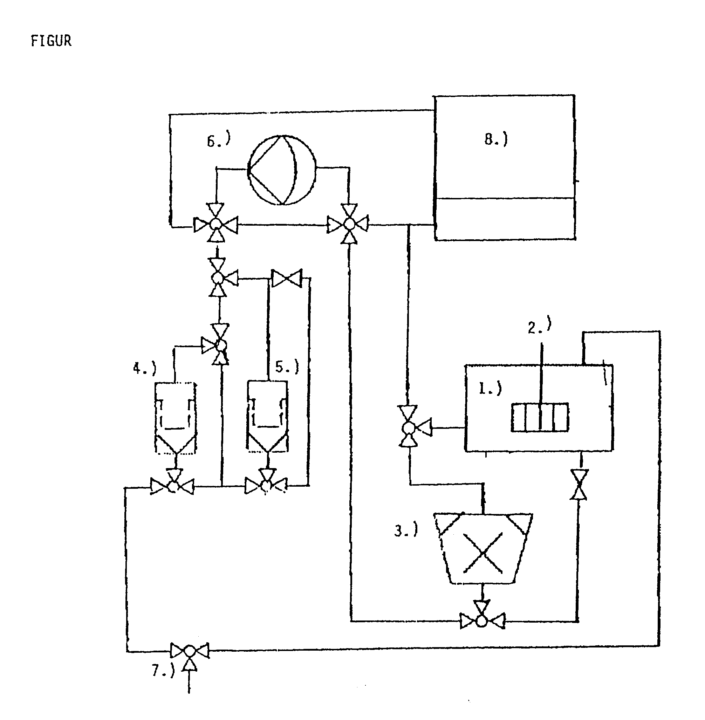

Die beigefügte Figur stellt ein Beispiel für eine bevorzugte Ausführungsform der erfindungsgemäßen Vorrichtung dar.

Aus der Naßspritzkabine 8 gelangt das Verfahrenswasser in einen Vorratsbehälter 1, der mit einer Rührvorrichtung 2, beispielsweise einem Turborührer, ausgestattet sein kann. Von dem Vorratsbehälter 1 führt eine Leitung zum Emulgieraggregat 3, das beispielsweise eine Kolloidmühle ist. Aus dem Emulgieraggregat 3 kann über eine Leitung die erhaltene Emulsion in die Naßspritzkabine direkt oder erneut in den Vorratsbehälter zurückgeführt werden. Eine weitere Leitung führt aus dem Emulgieraggregat 3 über eine zuschaltbare Pumpe 6, bei der er sich beispielsweise um eine Membranpumpe oder Kreiselpumpe handelt, zu zuschaltbaren Filtern 4 und 5, die als Beutelfilter dargestellt sind. Die von der Pumpe 6 oder den Filtern 4 und 5 kommende Leitung ist mit einem zuschaltbaren Auslauf 7 versehen. Dieser kann zur Abführung der Emulsion zur ansatzweisen Redoxpolymerisation verwendet werden. Im übrigen führt die Leitung zurück in die Naßspritzkabine oder in den Vorratsbehälter 1.

Im folgenden wird die Erfindung durch drei Beispiele anhand der in der Figur gezeigten Vorrichtung erläutert.

Beispiel 1:

halbkontinuierliche Verfahrensweise (unter Zusatz des Reduktionsmittels zur Verfahrensflüssigkeit)

In einer üblichen Naßspritzkabine wird herkömmliches Wasser durch eine 3%ige Emulsion mit einem Zusatz von 0,5% Emulgator von strahlenhärtbaren Lackmaterialien ersetzt. In die Naßspritzkabine wird ein strahlenhärtbares Lackmaterial (100% Festkörper) gespritzt. Nach Auffangen des Oversprays mit der Emulgatorlösung sind etwa 10 Gew.% Festkörper in der erhaltenen Verfahrensflüssigkeit enthalten.

Zur Entsorgung des angefallenen Overspray-Lackmaterials wird der Umlauf der Emulgatorlösung über die Auffangwände (Naßrieselwände) der Naßspritzkabine 8 abgeschaltet und das noch nicht vollständig homogene Emulgator/Overspray-Lacksystem in den Vorratsbehälter 1 gepumpt. Mit Hilfe eines Dispergieraggregates (hochtourige Kreiselpumpe 3) gelangt die Verfahrensflüssigkeit wieder in den Vorratsbehäter im Kreislauf zurück. Sind Verunreinigungen vorhanden, so können die Beutelfilter 4 oder 5 zugeschaltet werden. Hierbei stellt sich nach kurzer Zeit eine stabile homogene Emulsionsphase ein. Während des Pumpens im Kreislauf wird als Reduktionsmittel Eisen-II-Chlorid zugesetzt, in einer Menge, die dem zu entsorgenden Festkörper entspricht. Anschließend wird in den Vorratsbehälter 1 gepumpt, im Kreislauf durch die Filter und gegebenenfalls die Dispersionsvorrichtung geführt und die entsprechende Menge Wasserstoffperoxid kontinuierlich zudosiert. Es scheidet sich nach kurzer Zeit ein weißes, flockiges und feinverteiltes Polymerisat ab, daß im Beutelfilter 4 oder 5 als Rückstand abfiltriert wird. Die abgetrennte Verfahrensflüssigkeit enthält nach Abtrennen des Polymerisats weder Lackmaterial noch Emulgator. Letzterer wird durch das ausgefallene Polymerisat gebunden und ebenfalls entsorgt. Die abgeschiedene filtrierte Verfahrensflüssigkeit enthält als Verunreinigung nur geringe Mengen an Eisen-III-Chlorid, die entsprechend den gesetzlichen Bestimmungen auf übliche Art und Weise entsorgt werden können.

Beispiel 2:

ansatzweise Verfahrensweise

Es wird wie im Beispiel 1 gearbeitet, jedoch mit folgenden Änderungen: Zur Entsorgung wird das angefallene Overspray/Lackmaterial, das sich in oder auf der Emulgatorlösung in der Naßspritzkabine 8 befindet, über das Dispersions- oder Emulgieraggregat 3 im Kreislauf gefahren, bis eine stabile Emulsion entsteht. Diese Emulsion wird über den Auslauf 7 in Behälter (Fässer) abgefüllt, in welche, falls noch kein Eisen-II-Chlorid, vorliegt, dieses zugegeben wird und anschließend mit der entsprechenden Menge Wasserstoffperoxid unter Rühren das Polymerisat ausgefällt wird. Nach einer Reaktionszeit von etwa 10 min wird von der klargewordenen Lösung das ausgefallene Polymerisat beispielsweise über Beutelfilter separat abfiltriert.

Beispiel 3:

Verfahrensweise mit lösemittelhaltigem Material

Es wird wie im Beispiel 1 gearbeitet, jedoch mit folgenden Änderungen: In die Spritzkabine wird ein strahlenhärtbares Lackmaterial mit einem Festkörper von 70 Gew.% und 30 Gew.% Lösemittelanteil (Butylacetat) verspritzt.

Hierbei verdunstet beim Auffangen des Oversprays an den Rieselwänden der größte Teil des Lösemittels, der auf die übliche Art mit der Kabinenabluft entsorgt wird.

Allgemein läßt sich feststellen, daß bei Durchführung des erfindungsgemäßen Verfahrens mit lösemittelhaltigen strahlenhärtbaren Lacken die Lösemittel beim Spritzen sowie beim Auffangen des Oversprays an den Rieselwänden der Naßluftkabine größtenteils verdunsten. Sie können auf übliche Art mit der Kabinenluft entsorgt werden. Im Overspray verbleibende geringe Lösemittelanteile werden beim Emulgiervorgang nicht einemulziert und

entweichen nach mehrmaligem Umpumpen der Verfahrensflüssigkeit in der Naßspritzkabine über die Abluft.

Zurückbleibende Lösemittelanteile stören wegen ihres geringen Anteils die nachfolgend durchgeführte Redoxpolymerisation und das Abfiltrieren des ausgefällten Pulvers nicht.

Der Fachmann wird in lösemittelhaltigen, strahlenhärtbaren Lacken bevorzugt Lösemittel oder Lösemittelgemische einsetzen, die das ausgefällte Polymerpulver nicht verkleben, anquellen oder anlösen.

Hierbei hat sich gezeigt, daß Lösemittelanteile bis zu 10 Gew.%, bezogen auf die Verfahrensflüssigkeit, die üblicherweise für die Applikation von Lacken, insbesondere bei strahlenhärtbaren Lacken, eingesetzt werden, weder die Redoxpolymerisation noch die Pulverausfällung negativ beeinflussen. Auf jeden Fall können größere Lösemittelanteile durch häufiges Umlaufen der Verfahrensflüssigkeit über die Abluft, gemäß der gesetzlichen Auflagen, vor der Redoxpolymerisation auf nicht störende Anteile reduziert werden.

Durch die erfindungsgemäße Verfahrensweise und die erfindungsgemäße Vorrichtung ergibt sich der Vorteil der Entsorgungsmöglichkeit von Oversprays, die beim Spritzlackieren von strahlenhärtbaren Lacken entstehen. Durch die eingesetzte Emulgierbehandlung erhält man kleinteilige bzw. pulverförmige Polymerisate, die leicht abfiltriert werden können. Auf diese Weise ergibt sich eine problemlose, rasche und vollständige Entsorgung.

Zugleich läßt sich ein hochwertiger, feinverteilter, sauberer Füllstoff für weitere Einsatzzwecke (z.B. für Kunststoffmassen und Überzugsmaterialien) herstellen.

**Patentansprüche**

1. Verfahren zur Entsorgung des beim Spritzlackieren mit strahlenhärtbaren Lacken in einer Naßspritzkabine erhaltenen Oversprays durch Auffangen an mit Verfahrensflüssigkeit bespülten Auffangwänden und Entfernen des Overspray-Anteils aus dem Verfahrensflüssigkeit-Overspray-Gemisch **dadurch gekennzeichnet,** daß man als Verfahrensflüssigkeit eine Emulsion eines strahlenhärtbaren Lacks in Wasser mit einem Überschuß an Emulgator verwendet und den Overspray-Anteil aus dem Verfahrensflüssigkeits-Overspray-Gemisch durch Redoxpolymerisation und anschließende Filtration der erhaltenen pulverförmigen Produkte entfernt.

2. Verfahren nach Anspruch 1, dadurch gekennzeichnet, daß man als Verfahrensflüssigkeit eine Emulsion mit mindestens 2 Gew.% strahlenhärtbarem Lack, berechnet als Festkörper der strahlenhärtbaren Lackanteile und bezogen auf das Gewicht der gesamten Verfahrensflüssigkeit, verwendet.

3. Verfahren nach Anspruch 1 oder 2, dadurch gekennzeichnet, daß man einen Emulgatorüberschuß von mindestens 0,5 Gew.%, bezogen auf das Gewicht der gesamten Verfahrensflüssigkeit, verwendet.

4. Verfahren nach einem der vorhergehenden Ansprüche, dadurch gekennzeichnet, daß man die Redoxpolymerisation durch Zusatz eines Peroxids und eines Reduktionsmittels durchführt.

5. Verfahren nach Anspruch 4, dadurch gekennzeichnet, daß man als Peroxid Wasserstoffperoxid oder ein Peroxodisulfat verwendet.

6. Verfahren nach Anspruch 4 oder 5, dadurch gekennzeichnet, daß man als Reduktionsmittel ein reduzierendes Metallsalz oder eine reduzierende organische Verbindung verwendet.

7. Verfahren nach einem der Ansprüche 4 bis 6, dadurch gekennzeichnet, daß das Reduktionsmittel von vornherein der Verfahrensflüssigkeit und insbesondere vor der Zugabe des Peroxids zugesetzt wird.

8. Verfahren nach einem der vorhergehenden Ansprüche, dadurch gekennzeichnet, daß das emulgierte Verfahrensflüssigkeit-Overspray-Gemisch vor der Redoxpolymerisation mit anschließender Filtration im Kreislauf in die Naßspritzkabine so lange zurückgeführt wird, bis eine stabile homogene Emulsionsphase vorliegt.

9. Verfahren nach einem der vorhergehenden Ansprüche, dadurch gekennzeichnet, daß man vor der Redoxpolymerisation einen Teil des emulgierten Verfahrensflüssigkeit-Overspray-Gemischs abtrennt und durch Wasser- und Emulgatorzusatz als Verfahrensflüssigkeit aufbereitet.

10. Vorrichtung zur Durchführung des Verfahrens nach einem der Ansprüche 1 bis 9, mit einer Naßspritzkabine (8), die durch Verfahrensflüssigkeit bespülbare Auffangwände enthält, gekennzeichnet durch eine Ableitung für die zum Bespülen verwendete Verfahrensflüssigkeit, die zu einer Dispergiervorrichtung (3) führt.

**11.** Vorrichtung nach Anspruch 10, dadurch gekennzeichnet, daß die Ableitung über einen Vorratsbehälter (1) zur Dispergiervorrichtung (3) führt.

**12.** Vorrichtung nach Anspruch 10 oder 11, gekennzeichnet durch eine Leitung zur Rückführung der Verfahrensflüssigkeit in die Naßspritzkabine (8).

**13.** Vorrichtung nach Anspruch 11, gekennzeichnet durch eine Leitung zur Rückführung der Verfahrensflüssigkeit aus der Dispergiervorrichtung (3) in den Vorratsbehälter (1).

**14.** Vorrichtung nach einem der Ansprüche 10 bis 13, gekennzeichnet durch von dem Vorratsbehälter (1) und der Dispergiervorrichtung (3) zuschaltbare wegführende Leitungen, die über eine zuschaltbare Pumpe (6) zu einem oder mehreren zuschaltbaren Filtern (4, 5) führen.

**15.** Verwendung der beim Verfahren eines der Ansprüche 1 bis 4 erhaltenen Pulver als Füllstoff für Kunststoffmassen und Anstrichmittel.

FIGUR

**Europäisches Patentamt**

**EUROPÄISCHER RECHERCHENBERICHT**

Nummer der Anmeldung

**EP 91 11 4915**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 212 214   (HERMANN WIEDERHOLD) <br> * Zusammenfassung; Ansprüche 17-20 * * <br> – – – – – | 1 | C 09 D 7/00 <br> C 08 J 11/06 |

| | RECHERCHIERTE SACHGEBIETE (Int. Cl.5) |
|---|---|
| | C 09 D <br> C 08 J |

**Der vorliegende Recherchenbericht wurde für alle Patentansprüche erstellt**

| Recherchenort | Abschlußdatum der Recherche | Prüfer |
|---|---|---|
| Den Haag | 20 Dezember 91 | GIRARD Y.A. |